# EUROPÄISCHE PATENTSCHRIFT

(11) **EP 3 876 477 B1**
(45) Veröffentlichungstag und Bekanntmachung des Hinweises auf die Patenterteilung: **27.12.2023**
(21) Anmeldenummer: 21156475.2
(22) Anmeldetag: 11.02.2021
(51) Int. Cl.: H04L 43/0817, G06F 8/65, G06F 21/57

(54) **VERFAHREN ZUR ÜBERPRÜFUNG EINES ISTZUSTANDS ELEKTRONISCHER KOMPONENTEN**
METHOD FOR CHECKING THE CURRENT CONDITION OF ELECTRONIC COMPONENTS
PROCÉDÉ DE VÉRIFICATION D'UN ÉTAT RÉEL DES COMPOSANTS ÉLECTRONIQUES

(30) Priorität: 06.03.2020 DE 102020202897
(43) Veröffentlichungstag der Anmeldung: 08.09.2021
(73) Patentinhaber: Siemens Mobility GmbH, 81739 München (DE)
(72) Erfinder: Braband, Jens, 38106 Braunschweig (DE)
(74) Vertreter: Siemens Patent Attorneys

(56) Entgegenhaltungen:
- EP-A2- 2 147 845
- US-A1- 2015 113 587
- US-A1- 2017 163 488

## Beschreibung

Es wird ein Verfahren zur Überprüfung eines Istzustands von zumindest zwei elektronischen Komponenten angegeben. Darüber hinaus werden eine Vorrichtung, ein Schienenfahrzeug, ein Computerprogramm und ein computerlesbares Speichermedium angegeben.

Die US 2017/0163488 A1 beschreibt eine Vorrichtung, die Änderungen in einer Cloudumgebung erkennt und offenlegt. Die EP 2 147 845 A2 offenbart ein Verfahren zur Überwachung einer Anzeigeeinheit in einem Fahrzeug.

Eine zu lösende Aufgabe besteht darin, ein Verfahren anzugeben, mit dem ein Istzustand von zumindest zwei elektronischen Komponenten besonders sicher überprüft werden kann. Des Weiteren sollen eine Vorrichtung, ein Schienenfahrzeug und ein Computerprogramm angegeben werden, die ein solches Verfahren ausführen können. Darüber hinaus soll ein computerlesbares Speichermedium angegeben werden.

Die Aufgaben werden durch das Verfahren und die Gegenstände der Patentansprüche 1, 4, 5, 6 und 7 gelöst. Vorteilhafte Ausgestaltungen, Implementierungen und Weiterbildungen sind Gegenstand der jeweils abhängigen Patentansprüche.

Zunächst wird das Verfahren zur Überprüfung eines Istzustands von zumindest zwei elektronischen Komponenten, die jeweils eine vorgegebene Komponenteninformation und eine Zustandsinformation aufweisen, erläutert.

Bevorzugt handelt es sich bei den elektronischen Komponenten jeweils um eine Schnittstelle zu zumindest einem Betriebsmittel eines technischen Prozesses. Bevorzugt ist jede elektronische Komponente mit dem Betriebsmittel verbunden.

Die elektronischen Komponenten sind erfindungsgemäß Teil eines Netzwerkes. Weiterhin kann eine Zentraleinheit Teil des Netzwerkes sein. Bevorzugt ist die Zentraleinheit mit den elektronischen Komponenten durch zumindest eine Netzwerkverbindung verbunden. Weiterhin ist das Netzwerk bevorzugt dazu ausgebildet, Signale zwischen der Zentraleinheit und den elektronischen Komponenten zu übertragen. Bei dem Netzwerk handelt es sich bevorzugt um ein Bussystem, insbesondere um einen Feldbus.

Die elektronischen Komponenten umfassen gemäß einer Ausführungsform jeweils ein Betriebssystem. Das Betriebssystem ist beispielsweise für alle Komponenten gleich. Alternativ ist das Betriebssystem für zumindest manche oder alle Komponenten verschieden ausgebildet. Die elektronischen Komponenten werden bevorzugt in Abhängigkeit des jeweiligen Betriebssystems gesteuert und/oder betrieben. Jede Zustandsinformation, die jeweils einem der elektronischen Komponenten zugeordnet ist, ist bevorzugt abhängig von dem jeweiligen Betriebssystem. Die Betriebssysteme können weiterhin aktualisiert werden.

Bei den zu übertragenden Signalen kann es sich um zumindest eine Aktualisierung des Betriebssystems handeln.

Mit dem Begriff "vorgegebene Komponenteninformationen" ist hier und im Folgenden insbesondere gemeint, dass die vorgegebenen Komponenteninformationen insbesondere nicht von den elektronischen Komponenten erzeugt oder vorgegeben werden. Die Komponenteninformationen werden den Komponenten beispielsweise bereitgestellt. Jede Komponenteninformation ist bevorzugt ausschließlich einer einzelnen elektronischen Komponente bekannt.

Jeder elektronischen Komponente ist bevorzugt eine einzige vorgegebene Komponenteninformation zugeordnet. Weiterhin ist jeder elektronischen Komponente bevorzugt eine einzige Zustandsinformation zugeordnet. Alle vorgegebenen Komponenteninformationen sind bevorzugt verschieden voneinander ausgebildet. Weiterhin sind zumindest manche der oder alle Zustandsinformationen beispielsweise verschieden voneinander ausgebildet. Alternativ dazu sind beispielsweise alle Zustandsinformationen gleich.

Das Netzwerk kann weiterhin eine Vielzahl von elektronischen Komponenten umfassen. In diesem Fall können zumindest zwei der elektronischen Komponenten eine gleiche Zustandsinformation umfassen. Alternativ ist jede der Zustandsinformationen verschieden voneinander ausgebildet.

Gemäß zumindest einer Ausführungsform des Verfahrens wird ein Istzustand aller elektronischen Komponenten in Abhängigkeit der vorgegebenen Komponenteninformation und der Zustandsinformationen ermittelt. Bei dem Istzustand handelt es sich um den Zustand aller elektronischen Komponenten, beispielsweise nachdem das Betriebssystem mit einer Aktualisierung aktualisiert ist. Der Istzustand wird bevorzugt von der Zentraleinheit ermittelt.

Gemäß zumindest einer Ausführungsform des Verfahrens wird ein vorgegebener Sollzustand der elektronischen Komponenten bereitgestellt. Bevorzugt sind die Zustände der einzelnen elektronischen Komponenten vorgebbar. Das heißt, die Zustände der einzelnen elektronischen Komponenten sind insbesondere bekannt. Durch diese vorgebbaren Zustände der einzelnen elektronischen Komponenten kann der vorgegebene Sollzustand bereitgestellt, insbesondere ermittelt, werden.

Beispielsweise wird die Aktualisierung des Betriebssystems der elektronischen Komponenten geplant. Durch die Aktualisierung werden die vorgegebenen Komponenteninformationen und die Zustandsinformationen bevorzugt vorgegeben. Damit kann vor dem Ermitteln des Istzustands der vorgegebene Sollzustand ermittelt werden.

Gemäß zumindest einer Ausführungsform des Verfahrens wird der ermittelte Istzustand mit dem vorgegebenen Sollzustand verglichen. Der Vergleich umfasst bevorzugt eine Vergleichsvorschrift, bei der der Istzustand mit dem vorgegebenen Sollzustand verglichen wird.

Der Vergleich wird beispielsweise auf der Zentraleinheit ausgeführt. Alternativ kann der Vergleich auf einer externen Vorrichtung ausgeführt werden. Die externe Vorrichtung ist bevorzugt ein Computer. Weiterhin ist die externe Vorrichtung bevorzugt nicht Teil des Netzwerks. Weiterhin ist die externe Vorrichtung bevorzugt nicht mit dem Netzwerk verbunden. Beispielsweise wird die Aktualisierung des Betriebssystems auf der externen Vorrichtung geplant.

Gemäß zumindest einer Ausführungsform des Verfahrens wird ein Fehlersignal in Abhängigkeit des Vergleichs ausgegeben. Sind der Istzustand und der vorgegebene Sollzustand gleich, wird bevorzugt kein Fehlersignal erzeugt. Bevorzugt wird das Fehlersignal erzeugt, wenn sich der Istzustand von dem vorgegebenen Sollzustand unterscheidet.

Bei dem Fehlersignal handelt es sich bevorzugt um ein elektronisches Signal. Alternativ kann es sich bei dem Fehlersignal um ein akustisches oder optisches Signal handeln. Bei dem Fehlersignal handelt es sich bevorzugt um eine Handlungsaufforderung an einen Benutzer.

Gemäß mindestens einer Ausführungsform des Verfahrens zur Überprüfung eines Istzustands von zumindest zwei elektronischen Komponenten, die jeweils eine vorgegebene Komponenteninformation und eine Zustandsinformation umfassen, wird ein Istzustand aller elektronischen Komponenten in Abhängigkeit der vorgegebenen Komponenteninformation und der Zustandsinformation ermittelt. Weiterhin wird ein vorgegebener Sollzustand der elektronischen Komponenten bereitgestellt. Der ermittelte Istzustand und der vorgegebene Sollzustand werden verglichen. Des Weiteren wird ein Fehlersignal in Abhängigkeit des Vergleichs ausgegeben.

Das hier angegebene Verfahren wird beispielsweise in der im vorherigen Absatz angegebenen Reihenfolge durchgeführt. Das Bereitstellen des vorgegebenen Sollzustands kann aber auch vor dem Ermitteln des Istzustands ausgeführt werden. Alternativ können die Ermittlung und die Bereitstellung zeitlich überlappen. Beispielsweise können die Bereitstellung des Sollzustands und die Ermittlung des Istzustands zeitlich gleichzeitig erfolgen.

In der Regel kann nur mit sehr großem Aufwand überprüft werden, ob eine Aktualisierung von Betriebssystemen von elektronischen Komponenten erfolgreich erfolgt ist.

Eine Idee der vorliegenden Anmeldung ist es, unter anderem, durch das angegebene Verfahren den Istzustand der elektronischen Komponenten besonders sicher zu überprüfen. Der Istzustand wird in Abhängigkeit der vorgegebenen Komponenteninformationen und der Zustandsinformationen, die jeweils einer der elektronischen Komponenten zugeordnet ist, erzeugt. Ist der vorgegebene Sollzustand gleich dem Istzustand, sind die elektronischen Komponenten in einem gewünschten Zustand. Beispielsweise kann so ein erfolgreiches und richtiges Laden der Aktualisierung eines Betriebssystems auf die elektronischen Komponenten mit Vorteil sichergestellt werden.

Erfindungsgemäß ist jede Komponenteninformation repräsentativ für eine eindeutige Kennzeichnung von jeweils einer der elektronischen Komponenten. Das heißt, jeder elektronischen Komponente ist bevorzugt eine einzige eineindeutige Kennzeichnung zugeordnet. Alle Kennzeichnungen der elektronischen Komponenten unterscheiden sich bevorzugt voneinander.

Bevorzugt werden die Kennzeichnungen der elektronischen Komponenten vorgegeben. Weiterhin wird insbesondere eine Zuordnung der Kennzeichnungen zu den jeweiligen elektronischen Komponenten vorgegeben. Bei den Kennzeichnungen der elektronischen Komponenten handelt es sich bevorzugt um binäre Zeichenfolgen und/oder hexadezimale Zeichenfolgen.

Gemäß zumindest einer Ausführungsform des Verfahrens ist jede Zustandsinformation repräsentativ für ein Betriebssystem jeweils einer der elektronischen Komponenten. Bevorzugt umfasst jede Zustandsinformation eine einzige eineindeutige Kennzeichnung des Betriebssystems, das jeweils einer der elektronischen Komponenten zugeordnet ist. Alle Kennzeichnungen der Betriebssysteme können sich voneinander unterschieden. Alternativ dazu können zumindest manche der Kennzeichnungen der Betriebssysteme gleich sein.

Bevorzugt werden die Kennzeichnungen der Betriebssysteme jeweils von den elektronischen Komponenten ermittelt. Beispielsweise werden die Kennzeichnungen der Betriebssysteme nach der Aktualisierung von den elektronischen Komponenten ermittelt.

Gemäß zumindest einer Ausführungsform des Verfahrens ist jede Zustandsinformation repräsentativ für eine Konfiguration des Betriebssystems jeweils einer der elektronischen Komponenten. Bevorzugt umfasst jede Zustandsinformation eine einzige eineindeutige Konfiguration des Betriebssystems, das jeweils einer der elektronischen Komponenten zugeordnet ist. Alle Konfigurationen der Betriebssysteme können sich voneinander unterscheiden. Alternativ dazu können zumindest manche der Kennzeichnungen der Betriebssysteme gleich sein.

Bevorzugt werden die Konfigurationen der Betriebssysteme jeweils von den elektronischen Komponenten ermittelt. Beispielsweise werden die Konfigurationen der Betriebssysteme nach der Aktualisierung von den elektronischen Komponenten ermittelt.

Besonders bevorzugt umfasst jede Zustandsinformation die Kennzeichnung des Betriebssystems und die Konfiguration des Betriebssystems, das einer der elektronischen Komponenten zugeordnet ist.

Erfindungsgemäß ermittelt jede elektronische Komponente einen Hashwert in Abhängigkeit der vorgegebenen Komponenteninformation und der Zustandsinformation beim Ermitteln des Istzustands. Bevorzugt weist jede elektronische Komponente nach dem Ermitteln des Hashwerts ausschließlich einen einzigen Hashwert auf.

Bevorzugt wird jeder Hashwert in Abhängigkeit der eineindeutigen Kennzeichnung der elektronischen Komponente, der eineindeutigen Kennzeichnung des Betriebssystems und der eineindeutigen Konfiguration des Betriebssystems ermittelt.

Beispielsweise wird der Hashwert jeder elektronischen Komponente mittels einer Hashfunktion eineindeutig zugewiesen. Beispielsweise ist die Hashfunktion abhängig von einem Parameter, insbesondere einem Initialisierungsvektor.

Die Hashwerte weisen bevorzugt eine binäre Zeichenfolge und/oder eine hexadezimale Zeichenkette auf, die aus Zahlen und/oder Buchstaben gebildet ist. Die Hashwerte sind bevorzugt jeweils gleich lang ausgebildet. Das heißt, die Anzahl der Zahlen und/oder der Buchstaben der Hashwerte sind bevorzugt gleich.

Erfindungsgemäß wird ein gemeinsamer Hashwert durch die ermittelten Hashwerte ermittelt. Bevorzugt ist der gemeinsame Hashwert ein einziger gemeinsamer Hashwert. Das heißt, der einzige gemeinsame Hashwert umfasst alle ermittelten Hashwerte.

Weist das Netzwerk mehrere elektronische Komponenten auf, entspricht der gemeinsame Hashwert einem Top-Hashwert eines Hash-Baums. Der Top-Hashwert des Hash-Baums wird auch als Root-Hash oder Master-Hash bezeichnet. Bei dem Hash-Baum handelt es sich in der Regel um einen Baum von Hash-Werten, die jeweils einen Knoten bilden. Bei dem Hash-Baum handelt es sich bevorzugt um einen gewurzelten Baum, der einen ausgezeichneten Knoten umfasst, von dem aus sämtliche andere Knoten erreichbar sind. Der Top-Hashwert entspricht in diesem Fall in der Regel dem ausgezeichneten Knoten.

Beispielsweise werden Hilfs-Hashwerte in Abhängigkeit von den Hashwerten von zwei direkt benachbarten elektronischen Komponenten ermittelt. Werden mehrere Hilfs-Hashwerte ermittelt, können weitere Hilfs-Hashwerte in Abhängigkeit von zweier direkt benachbarten Hilfs-Hashwerten ermittelt werden. Beispielsweise werden die weiteren Hilfs-Hashwerte so lange ermittelt, bis nur noch zwei weitere Hilfs-Hashwerte ermittelt werden, durch die der gemeinsame Hashwert ermittelt wird.

Erfindungsgemäß ist der gemeinsame Hashwert repräsentativ für den Istzustand.

Erfindungsgemäß wird zum Ermitteln des vorgegebenen Sollzustands von der externen Vorrichtung für jede elektronische Komponente ein weiterer Hashwert in Abhängigkeit der vorgegebenen Komponenteninformation und einer vorgegebenen Zustandsinformation ermittelt.

Mit dem Begriff "vorgegebene Zustandsinformation" ist hier und im Folgenden insbesondere gemeint, dass die vorgegebenen Zustandsinformationen nicht von den elektronischen Komponenten erzeugt oder vorgegeben werden. Jede vorgegebene Zustandsinformation ist bevorzugt ausschließlich der externen Vorrichtung bekannt.

Bevorzugt umfasst jede vorgegebene Zustandsinformation eine vorgegebene Kennzeichnung des Betriebssystems und eine vorgegebene Konfiguration des Betriebssystems, die jeweils einer elektronischen Komponente zugeordnet sind.

Erfindungsgemäß wird ein weiterer gemeinsamer Hashwert durch die ermittelten weiteren Hashwerte ermittelt. Weist das Netzwerk mehrere elektronische Komponenten auf, entspricht der weitere gemeinsame Hashwert bevorzugt einem Top-Hashwert eines weiteren Hash-Baums.

Erfindungsgemäß ist der gemeinsame Hashwert repräsentativ für den vorgegebenen Sollzustand.

Gemäß zumindest einer Ausführungsform des Verfahrens werden die Komponenteninformationen nach dem Ermitteln des Istzustands von den elektronischen Komponenten gelöscht. Bevorzugt werden die Komponenteninformationen ausschließlich temporär auf den elektronischen Komponenten gespeichert. Insbesondere werden die Komponenteninformationen bevorzugt ausschließlich während des Ermittelns des Istzustands temporär auf den elektronischen Komponenten gespeichert. Beispielsweise werden die Komponenteninformationen ausschließlich während der Aktualisierung des Betriebssystems den elektronischen Komponenten bereitgestellt und zugeordnet.

Erfindungsgemäß sind die elektronischen Komponenten Teil eines sicherheitsrelevanten Systems. Bei den elektronischen Komponenten handelt es sich bevorzugt um sicherheitsrelevante Komponenten. Die sicherheitsrelevanten Komponenten sind bevorzugt dazu ausgebildet, beispielsweise eine sicherheitstechnische Anlage in einem sicheren Zustand zu betreiben.

Des Weiteren wird eine Vorrichtung zur Überprüfung des Istzustands angegeben, wobei die Vorrichtung dazu ausgebildet ist, das hier beschriebene Verfahren durchzuführen. Sämtliche in Verbindung mit dem Verfahren offenbarten Merkmale und Ausführungsformen können daher auch in Verbindung mit der Vorrichtung ausgebildet sein und umgekehrt.

Beispielsweise ist die Vorrichtung in einer sicherheitstechnischen Anlage, wie zum Beispiel einem Stellwerk für Schienenfahrzeuge, umfasst.

Darüber hinaus wird ein Schienenfahrzeug angegeben, das die hier beschriebene Vorrichtung aufweist. Sämtliche in Verbindung mit der Vorrichtung offenbarten Merkmale und Ausführungsformen können daher auch in Verbindung mit dem Schienenfahrzeug ausgebildet sein und umgekehrt.

Insbesondere können eine Vielzahl von Schienenfahrzeugen, also eine Schienenfahrzeugflotte, jeweils die hier beschriebene Vorrichtung aufweisen.

Zudem wird ein Computerprogramm angegeben, umfassend Befehle, die bei der Ausführung des Computerprogramms durch einen Computer diesen veranlassen, das hier beschriebene Verfahren auszuführen.

Weiterhin wird ein computerlesbares Speichermedium angegeben, auf dem das Computerprogramm gespeichert ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
- Figur 1: eine schematische Darstellung einer Vorrichtung gemäß einem Ausführungsbeispiel,
- Figur 2: eine schematische Darstellung eines Schienenfahrzeugs gemäß einem Ausführungsbeispiel,
- Figur 3: ein Ablaufdiagramm eines Verfahrens gemäß einem Ausführungsbeispiel und
- Figur 4: ein exemplarisches Beispiel eines Hash-Baums.

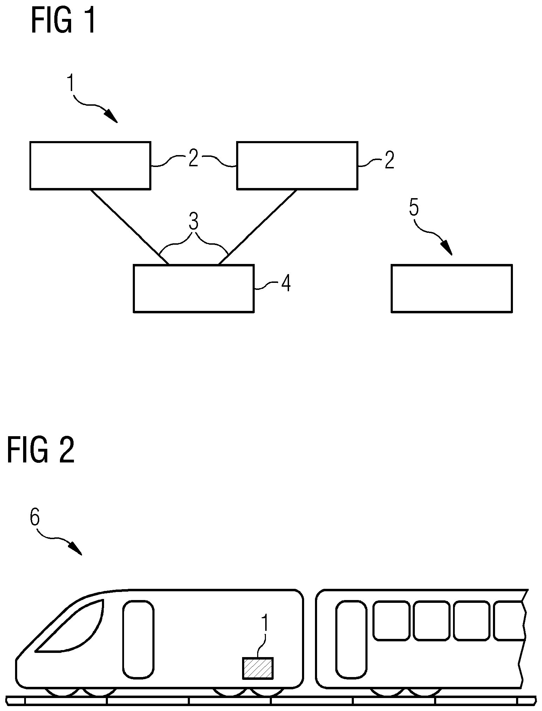

Die Vorrichtung 1 gemäß dem Ausführungsbeispiel der Figur 1 umfasst ein Netzwerk. Das Netzwerk umfasst zwei elektronische Komponenten 2, die mittels einer Netzwerkverbindung 3 mit einer Zentraleinheit 4 verbunden sind. Bevorzugt ist jede elektronische Komponente 2 mit zumindest einem Betriebsmittel verbunden (hier nicht gezeigt). Weiterhin ist jede elektronische Komponente 2 zum Beispiel dazu ausgebildet, Prozesssignale mit dem Betriebsmittel auszutauschen, das der elektronischen Komponente 2 zugeordnet ist. Die Betriebsmittel umfassen beispielsweise jeweils zumindest einen Aktor und/oder zumindest einen Sensor. Weiterhin kann es sich bei den Prozesssignalen um zumindest ein Stellsignal und/oder zumindest ein Messsignal handeln. Beispielsweise wird der Aktor über das Stellsignal angesteuert. Der Sensor ist beispielsweise dazu ausgebildet, das Messsignal zu erzeugen.

Die elektronischen Komponenten 2 umfassen weiterhin jeweils ein Betriebssystem. Die elektronischen Komponenten 2 werden bevorzugt in Abhängigkeit des jeweiligen Betriebssystems gesteuert und/oder betrieben. Insbesondere werden die Betriebsmittel in Abhängigkeit des jeweiligen Betriebssystems angesteuert und/oder betrieben.

Die elektronischen Komponenten 2 weisen jeweils eine vorgegebene Komponenteninformation auf. Insbesondere sind die vorgegebenen Komponenteninformationen nicht von den elektronischen Komponenten 2 erzeugbar. Jede Komponenteninformation ist bevorzugt ausschließlich einer einzigen elektronischen Komponente 2 bekannt. Jede Komponenteninformation ist repräsentativ für eine eindeutige Kennzeichnung von jeweils einer der elektronischen Komponenten 2.

Weiterhin weisen die elektronischen Komponenten 2 jeweils eine Zustandsinformation in Abhängigkeit des Betriebssystems auf. Insbesondere sind die Zustandsinformationen von den elektronischen Komponenten 2 erzeugbar.

Jeder elektronischen Komponente 2 ist bevorzugt eine einzige vorgegebene Komponenteninformation und eine einzige Zustandsinformation zugeordnet.

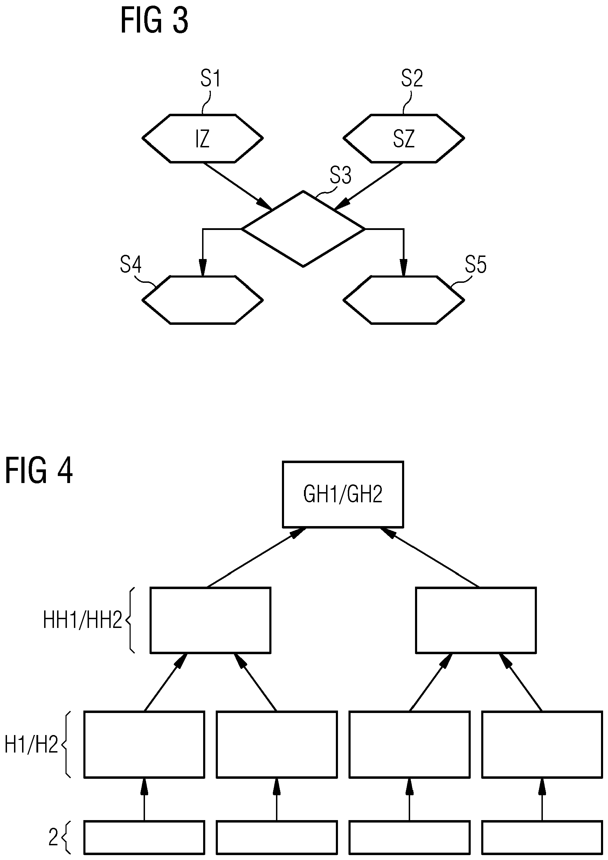

Die Vorrichtung 1 ist dazu ausgebildet, einen Istzustand IZ aller elektronischen Komponenten 2 in Abhängigkeit der vorgegebenen Komponenteninformationen und der Zustandsinformationen zu ermitteln, wie beispielsweise anhand Figur 3 näher erläutert. Beispielsweise ist die Zentraleinheit 4, die Teil des Netzwerks ist, dazu ausgebildet, den Istzustand IZ zu ermitteln.

Weiterhin ist eine externe Vorrichtung 5, die nicht Teil des Netzwerks ist, dazu ausgebildet, einen Sollzustand SZ in Abhängigkeit der vorgegebenen Komponenteninformationen und vorgegebenen Zustandsinformationen bereitzustellen.

Das Schienenfahrzeug 6 gemäß dem Ausführungsbeispiel der Figur 2 umfasst eine Vorrichtung 1, mit der ein Verfahren gemäß dem Ausführungsbeispiel der Figur 3 durchgeführt werden kann.

Nach dem Ablaufdiagramm des Verfahrens gemäß dem Ausführungsbeispiel der Figur 3 wird in einem Verfahrensschritt S1 ein Istzustand IZ aller elektronischen Komponenten 2 in Abhängigkeit von vorgegebenen Komponenteninformationen und Zustandsinformationen ermittelt.

Vorliegend werden die vorgegebenen Komponenteninformationen insbesondere nicht von den elektronischen Komponenten 2 erzeugt.

Beim Ermitteln des Istzustands IZ ermittelt jede elektronische Komponente 2 einen Hashwert H1 in Abhängigkeit der vorgegebenen Komponenteninformation und der Zustandsinformation, die der jeweiligen elektronischen Komponente 2 zugeordnet ist. Nach dem Ermitteln der Hashwerte H1 weist jede elektronische Komponente 2 ausschließlich einen einzelnen Hashwert H1 auf, wie beispielsweise in Verbindung mit der Figur 4 näher erläutert.

In dem vorliegenden Ausführungsbeispiel wird jeder Hashwert H1 in Abhängigkeit einer eineindeutigen Kennzeichnung der elektronischen Komponente 2, einer eineindeutigen Kennzeichnung eines Betriebssystems der elektronischen Komponente 2 und einer eineindeutigen der Konfiguration des Betriebssystems der elektronischen Komponente 2 ermittelt.

In Abhängigkeit aller ermittelten Hashwerte H1 wird ein einziger gemeinsamer Hashwert GH1 ermittelt, der den Istzustand IZ repräsentiert. Werden mehrere Hashwerte H1 ermittelt, entspricht der gemeinsame Hashwert GH1 einem Top-Hashwert eines Hash-Baums, der in Verbindung mit dem Beispiel der Figur 4 näher erläutert ist.

Vorliegend umfassen die elektronischen Komponenten 2 jeweils ein Betriebssystem, das jeweils dazu ausgebildet ist, die elektronischen Komponenten 2 zu steuern und/oder zu betreiben. Diese Betriebssysteme werden vorliegend aktualisiert. Nach dem Aktualisieren wird vorliegend der Istzustand IZ ermittelt.

In einem weiteren Verfahrensschritt S2 wird ein vorgegebener Sollzustand SZ der elektronischen Komponenten 2 bereitgestellt. Der vorgegebene Sollzustand SZ wird in Abhängigkeit der vorgegebenen Komponenteninformationen und von vorgegebenen Zustandsinformationen ermittelt.

In dem vorliegenden Ausführungsbeispiel wird für jede Komponente von einer externen Vorrichtung 5 ein weiterer Hashwert H2 in Abhängigkeit der vorgegebenen Komponenteninformationen und der vorgegebenen Zustandsinformationen ermittelt.

In Abhängigkeit aller ermittelten weiteren Hashwerte H2 wird ein einziger weiterer gemeinsamer Hashwert GH2 ermittelt, der den Sollzustand SZ repräsentiert. Werden beispielsweise mehrere weitere Hashwerte H1 ermittelt, entspricht der weitere gemeinsame Hashwert GH2 einem weiteren Top-Hashwert eines Hash-Baums.

Vorliegend wird die Aktualisierung des Betriebssystems der elektronischen Komponenten 2 vor der Aktualisierung geplant. Damit werden die Komponenteninformation und die Zustandsinformationen vorgegeben. Das heißt, das Bereitstellen des vorgegebenen Sollzustands SZ wird bevorzugt vor dem Ermitteln des Istzustands IZ ausgeführt.

In einem weiteren Verfahrensschritt S3 werden der ermittelte Istzustand IZ und der vorgegebene Sollzustand SZ miteinander verglichen. Nachfolgend kann in Abhängigkeit des Vergleichs ein Fehlersignal ausgegeben werden.

Im Verfahrensschritt S4 sind der Istzustand IZ und der vorgegebene Sollzustand SZ gleich. Das heißt, der gemeinsame Hashwert GH1 und der weitere gemeinsame Hashwert GH2 unterscheiden sich nicht. In diesem Fall wird kein Fehlersignal erzeugt.

Im Verfahrensschritt S5 sind der Istzustand IZ und der vorgegebene Sollzustand SZ verschieden voneinander ausgebildet. Das heißt, der gemeinsame Hashwert GH1 und der weitere gemeinsame Hashwert GH2 unterscheiden sich. In diesem Fall wird das Fehlersignal erzeugt.

Der Hash-Baum gemäß der Figur 4 umfasst mehrere Hashwerte H1 oder weitere Hashwerte H2, die jeweils einer elektronischen Komponente 2 zugeordnet sind, wobei die elektronischen Komponenten 2 in Verbindung mit der Figur 1 näher erläutert sind.

Aus jeweils zwei direkt benachbarten Hashwerten H1, die jeweils zweier direkt benachbarten elektronischen Komponenten 2 zugeordnet sind, werden Hilfs-Hashwerte HH1 ermittelt. Aus diesen Hilfs-Hashwerten HH1 wird der gemeinsame Hashwert GH1 ermittelt.

Weiterhin können von einer externen Vorrichtung 5, wie in Figur 1 näher erläutert, jeweils zwei direkt benachbarte weitere Hashwerte H2, die jeweils zweier direkt benachbarten elektronischen Komponenten 2 zugeordnet sind, weitere Hilfs-Hashwerte HH2 ermittelt werden. Aus diesen weiteren Hilfs-Hashwerten HH2 wird der weitere gemeinsame Hashwert GH2 ermittelt.

In diesem Beispiel entspricht der gemeinsame Hashwert GH einem Top-Hashwert eines Hash-Baums. Bei dem Hash-Baum handelt es sich um einen Baum von Hash-Werten. Der Top-Hashwert entspricht damit einem ausgezeichneten Knoten des Hash-Baums. Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Vorrichtung
- 2: elektronische Komponente
- 3: Netzwerkverbindung
- 4: Zentraleinheit
- 5: externe Vorrichtung
- 6: Schienenfahrzeug

- IZ: Istzustand
- SZ: Sollzustand
- H1: Hashwert
- HH1: Hilfs-Hashwert
- GH1: gemeinsamer Hashwert
- H2: weiterer Hashwert
- HH2: weiterer Hilfs-Hashwert
- GH2: weiterer gemeinsamer Hashwert
- S1..S5: Verfahrensschritte

## Patentansprüche

1. Verfahren zur Überprüfung eines Istzustands (IZ) von zumindest zwei elektronischen Komponenten (2), die jeweils eine vorgegebene Komponenteninformation und eine Zustandsinformation aufweisen und die Teil eines Netzwerkes und Teil eines sicherheitsrelevanten Systems sind, mit den Schritten:
- Ermitteln eines Istzustands (IZ) aller elektronischen Komponenten (2) in Abhängigkeit der vorgegebenen Komponenteninformationen und der Zustandsinformationen,
- Bereitstellen eines vorgegebenen Sollzustands (SZ) der elektronischen Komponenten (2),
- Vergleich des ermittelten Istzustands (IZ) mit dem vorgegebenen Sollzustand (SZ), und
- Ausgeben eines Fehlersignals in Abhängigkeit des Vergleichs,
wobei beim Ermitteln des Istzustands (IZ)
- jede elektronische Komponente (2) einen Hashwert (H1) in Abhängigkeit der vorgegebenen Komponenteninformation und der Zustandsinformation ermittelt,
- ein gemeinsamer Hashwert (GH1) durch die ermittelten Hashwerte (H1) ermittelt wird, und
- der gemeinsame Hashwert (GH1) repräsentativ für den Istzustand (IZ) ist,
wobei jede Komponenteninformation repräsentativ für eine eindeutige Kennzeichnung von jeweils einer der elektronischen Komponenten (2), nicht von den elektronischen Komponenten (2) erzeugbar und ausschließlich einer einzigen elektronischen Komponente (2) aus den zumindest zwei elektronischen Komponenten (2) bekannt ist,
wobei zum Ermitteln des vorgegebenen Sollzustands (SZ)
- von einer externen Vorrichtung (5), die nicht Teil des Netzwerks ist, für jede elektronische Komponente (2) ein weiterer Hashwert (H2) in Abhängigkeit der vorgegebenen Komponenteninformation und einer vorgegebenen Zustandsinformation ermittelt wird,
- ein weiterer gemeinsamer Hashwert (GH2) durch die ermittelten weiteren Hashwerte (H2) ermittelt wird, und
- der weitere gemeinsame Hashwert (GH2) repräsentativ für den vorgegebenen Sollzustand (SZ) ist,
wobei beim Vergleich des ermittelten Istzustands (IZ) mit dem vorgegebenen Sollzustand (SZ) geprüft wird, ob der gemeinsame Hashwert (GH1) und der weitere gemeinsame Hashwert (GH2) unterschiedlich sind oder nicht.

2. Verfahren nach einem der vorherigen Ansprüche, wobei
- jede Zustandsinformation repräsentativ für ein Betriebssystem jeweils einer der elektronischen Komponenten (2) ist, und
- jede Zustandsinformation repräsentativ für eine Konfiguration des Betriebssystems jeweils einer der elektronischen Komponenten (2) ist.

3. Verfahren nach einem der vorherigen Ansprüche,
wobei die Komponenteninformationen nach dem Ermitteln des Istzustands (IZ) von den elektronischen Komponenten (2) gelöscht werden.

4. Vorrichtung (1) zur Überprüfung eines Istzustands (IZ) der elektronischen Komponenten (2), die dazu ausgebildet ist, das Verfahren nach einem der Ansprüche 1 bis 3 durchzuführen.

5. Schienenfahrzeug (6), das eine Vorrichtung (1) nach dem Anspruch 4 umfasst.

6. Computerprogramm umfassend Befehle, die bei der Ausführung des Computerprogramms durch eine Vorrichtung diese veranlassen, das Verfahren nach einem der Ansprüche 1 bis 3 auszuführen.

7. Computerlesbares Speichermedium, auf dem das Computerprogramm nach Anspruch 6 gespeichert ist.

## Claims

1. Method for checking an actual state (IZ) of at least two electronic components (2), which each have a predefined item of component information and an item of state information and which are part of a network and part of a safety-relevant system, with the steps:
- ascertaining an actual state (IZ) of all electronic components (2) as a function of the predefined component information and the state information,
- providing a predefined target state (SZ) of the electronic components (2),
- comparing the ascertained actual state (IZ) with the predefined target state (SZ), and
- outputting an error signal as a function of the comparison, wherein, when ascertaining the actual state (IZ),
- each electronic component (2) ascertains a hash value (H1) as a function of the predefined component information and the state information,
- a common hash value (GH1) is ascertained by way of the ascertained hash values (H1), and
- the common hash value (GH1) is representative of the actual state (IZ),
wherein each item of component information is representative of a unique identifier of one of the electronic components (2) in each case, cannot be generated by the electronic components (2) and is exclusively known to a unique electronic component (2) from the at least two electronic components (2),
wherein, to ascertain the predefined target state (SZ),
- for each electronic component (2) a further hash value (H2) is ascertained by an external apparatus (5), which is not part of the network, as a function of the predefined component information and a predefined item of state information,
- a further common hash value (GH2) is ascertained by way of the ascertained further hash values (H2), and
- the further common hash value (GH2) is representative of the predefined target state (SZ),
wherein, when comparing the ascertained actual state (IZ), the predefined target state (SZ) is used to check whether or not the common hash value (GH1) and the further common hash value (GH2) are different.

2. Method according to one of the preceding claims, wherein
- each item of state information is representative of an operating system of one of the electronic components (2) in each case, and
- each item of state information is representative of a configuration of the operating system of one of the electronic components (2) in each case.

3. Method according to one of the preceding claims,
wherein the component information is deleted after the ascertaining of the actual state (IZ) of the electronic components (2).

4. Apparatus (1) for checking an actual state (IZ) of the electronic components (2), which is embodied to perform the method according to one of claims 1 to 3.

5. Rail vehicle (6), which comprises an apparatus (1)
according to claim 4.

6. Computer program comprising commands which, when the computer program is executed by an apparatus, prompt said apparatus to carry out the method according to one of claims 1 to 3.

7. Computer-readable storage medium, on which the computer program according to claim 6 is stored.

## Revendications

1. Procédé de contrôle d'un état (IZ) réel d'au moins deux composants (2) électroniques, qui ont chacun une information de composant donnée à l'avance et une information d'état et qui font partie d'un réseau et partie d'un système pertinent pour la sécurité, comprenant les stades :
- on détermine un état (IZ) réel de tous les composants (2) électroniques en fonction des informations de composant données à l'avance et des informations d'état,
- on se procure un état (SZ) de consigne donné à l'avance des composants (2) électroniques,
- on compare l'état (IZ) déterminé à l'état (SZ) de consigne donné à l'avance, et
- on émet un signal de défaut en fonction de la comparaison, dans lequel, lors de la détermination de l'état (IZ) réel,
- chaque composant (2) électronique détermine une valeur (H1) de Hash en fonction de l'information de composant donnée à l'avance et de l'information d'état,
- on détermine une valeur (GH1) de Hash commune par les valeurs (H1) de Hash déterminées, et
- la valeur (GH1) de Hash commune est représentative de l'état (IZ) réel,
dans lequel chaque information de composant représentative d'une caractérisation univoque de respectivement l'un des composants (2) électroniques ne peut pas être produite par les composants (2) électroniques et est connue exclusivement d'un composant (2) électronique unique parmi les au moins deux composants (2) électroniques,
dans lequel, pour la détermination de l'état (SZ) de consigne donné à l'avance,
- on détermine, par un dispositif (5) extérieur qui ne fait pas partie du réseau, pour chaque composant (2) électronique, une autre valeur (H2) de Hash en fonction de l'information de composant donnée à l'avance et d'une information d'état donnée à l'avance,
- on détermine une autre valeur (GH2) de Hash commune par les autres valeurs (H2) de Hash déterminées, et
- l'autre valeur (GH2) de Hash commune est représentative de l'état (SZ) de consigne donné à l'avance,
dans lequel, lors de la comparaison de l'état (IZ) réel déterminé à l'état (SZ) de consigne donné à l'avance, on contrôle si la valeur (GH1) de Hash commune et l'autre valeur (GH2) de Hash commune sont différentes ou ne le sont pas.

2. Procédé suivant l'une des revendications précédentes, dans lequel
- chaque information d'état est représentative d'un système de fonctionnement de respectivement l'un des composants (2) électroniques, et
- chaque information d'état est représentative d'une configuration du système de fonctionnement respectivement de l'un des composants (2) électroniques.

3. Procédé suivant l'une des revendications précédentes, dans lequel on efface les informations de composant, après la détermination de l'état (IZ) réel des composants (2) électroniques.

4. Dispositif (1) de contrôle d'un état (IZ) réel des composants (2) électroniques, qui est constitué pour effectuer le procédé suivant l'une des revendications 1 à 3.

5. Véhicule (6) ferroviaire, qui comprend un dispositif (1) suivant la revendication 4.

6. Programme d'ordinateur comprenant des instructions qui, lors de la réalisation du programme d'ordinateur par un dispositif, font que celui-ci effectue un procédé suivant l'une des revendications 1 à 3.

7. Support de mémoire, déchiffrable par ordinateur, sur lequel est mis en mémoire le programme d'ordinateur suivant la revendication 6.
